(19) Europäisches Patentamt
European Patent Office
Office européen des brevets

(11) **EP 3 457 174 B1**

(12) **FASCICULE DE BREVET EUROPEEN**

(45) Date de publication et mention
de la délivrance du brevet:
**23.09.2020 Bulletin 2020/39**

(51) Int Cl.:
***G01S 13/90*** *(2006.01)* ***G01S 7/40*** *(2006.01)*

(21) Numéro de dépôt: **18190784.1**

(22) Date de dépôt: **24.08.2018**

(54) **PROCEDE DE COMPENSATION DE L'EFFET DU DEPOINTAGE D'ANTENNE DANS UNE IMAGE SAR ET RADAR METTANT EN OEUVRE UN TEL PROCEDE**

KOMPENSATIONSVERFAHREN DER FEHLAUSRICHTUNG EINER ANTENNE IN EINEM SAR-BILD, UND RADAR, DER DIESES VERFAHREN ANWENDET

METHOD OF COMPENSATING FOR THE EFFECT OF DEFLECTION OF AN ANTENNA IN A SAR IMAGE AND RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2017 FR 1700930**

(43) Date de publication de la demande:
**20.03.2019 Bulletin 2019/12**

(73) Titulaire: **Thales**
**92400 Courbevoie (FR)**

(72) Inventeurs:
• **DEVILLE, Aymeric**
**33700 MERIGNAC (FR)**
• **QUINQUIS, Alexandre**
**33700 MERIGNAC (FR)**
• **COTTRON, Rodolphe**
**33700 MERIGNAC (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2004/104630 US-B1- 8 212 714**

**Description**

La présente invention concerne un procédé de compensation de l'effet du dépointage d'antenne dans une image SAR. L'invention concerne également un radar mettant en œuvre un tel procédé.

Les radars aéroportés sont classiquement utilisés pour l'imagerie et la conduite de tir notamment. Ces applications nécessitent une très grande précision d'installation du système radar ainsi qu'une très grande précision de la centrale inertielle du porteur.

En particulier différents manques de précision du positionnement du radar, de la visée radar, du radôme et le manque de précision de la centrale inertielle entraînent un mauvais pointage du faisceau radar.

A titre d'exemple, un biais de pointage de l'antenne dû à la centrale inertielle, à l'installation peu précise ou à la déflexion du radôme est perceptible visuellement sur les cartes d'imagerie SAR et peut entraîner un problème de conduite de tir. Un effet de tôle ondulé est alors visible sur l'image SAR et dégrade fortement la compréhension de l'image.

Un exemple de procédé de mesure du dépointage d'antenne due aux mouvements de l'aéronef est divulgué par le document US 8212714 B1.

Une solution connue pour résoudre ce problème consiste à utiliser une centrale inertielle de très haute précision située au plus proche du radar. Dans cette solution, le radar doit être positionné avec les tolérances les plus faibles possibles afin de connaître le plus précisément possible la position du radar dans le repère du porteur, par exemple un avion. Cependant, plus les tolérances d'assemblage sont faibles, plus le coût d'installation devient important.

Par ailleurs, il est aussi nécessaire d'utiliser une centrale inertielle de très haute précision et de très faible latence située au plus proche du radar comme indiqué ci-dessus, ce qui a pour effet d'augmenter encore les coûts. Enfin, il reste des erreurs résiduelles dues au principe même de la centrale qui comporte intrinsèquement des défauts.

Cette solution est donc coûteuse et ne permet pas de corriger tous les biais.

Un but de l'invention est notamment de pallier ces inconvénients, en améliorant la correction des biais mentionnés précédemment, et cela au moindre coût.

A cet effet, l'invention a pour objet un procédé de compensation de l'effet du dépointage d'antenne dans une image SAR réalisée par un radar formée de plusieurs images élémentaires issues de spots d'émission successifs émis par ledit radar, lesdites images élémentaires se recouvrant en des zones dites de recouvrement, ladite mesure du dépointage $\varepsilon$ étant réalisée à partir de la différence entre les énergies reçues de deux spots successifs dans une zone de recouvrement, ladite compensation étant effectuée sur le gain d'antenne à la réception par la connaissance de ladite mesure.

Dans un mode de réalisation possible, la dite mesure est fonction du quotient desdites énergies, ledit quotient étant égal à la racine carré du quotient des gains moyens d'antenne dans ladite zone de recouvrement, ledit quotient étant *G2/G1,* où :

- *G1* représente la valeur moyenne du gain d'antenne d'un spot dans ladite zone de recouvrement ;
- *G2,* la valeur moyenne du gain d'antenne du spot consécutif dans la zone de recouvrement.

Ladite mesure est par exemple donnée par la relation suivante :

$$\varepsilon = \ln\left(\frac{G2}{G1}\right) * \frac{\theta_{3dB}^2}{8 * \ln(2) * \Delta\theta_{spot}(1 - r)}$$

où :

- $\varepsilon$ représente ladite mesure du dépointage ;
- $\theta_{3dB}$ représente l'ouverture angulaire du faisceau d'antenne à puissance maximale - 3dB ;
- $r$ représente le taux de recouvrement entre les images élémentaires correspondant auxdits deux spots consécutifs ;
- $\Delta\theta_{spot}$ représente la largeur angulaire desdits spots.

Ladite compensation, fonction de l'angle $\theta$ entre le centre faisceau d'antenne et la zone imagée par ladite image SAR, appliquée sur le gain d'antenne est par exemple donnée par la relation suivante, $G_{correction}(\theta)$ étant ladite compensation :

$$G_{correction}(\theta) = \exp[+4 * \ln(2) * (\frac{\theta - \varepsilon}{\theta_{3dB}})^2]$$

Ladite mesure est par exemple effectuée selon une période donnée.

L'invention a également pour objet un radar mettant en œuvre un tel procédé.

D'autres caractéristiques et avantages de l'invention apparaîtront à l'aide de la description qui suit, faite en regard de dessins annexés qui représentent :

- La figure 1, dans le plan Distance-Doppler, une image composée à l'aide de plusieurs spots successif ;
- La figure 2, une illustration de l'énergie reçue dans deux zones élémentaires adjacentes issues de deux spots successifs sans dépointage d'antenne ;
- La figure 3, une illustration de l'énergie reçue dans deux zones élémentaires adjacentes issues de deux spots successifs en cas de dépointage d'antenne ;
- La figure 4, l'illustration de la figure 3 complétée par des paramètres utilisés dans un exemple de détermination de la mesure du dépointage d'antenne.

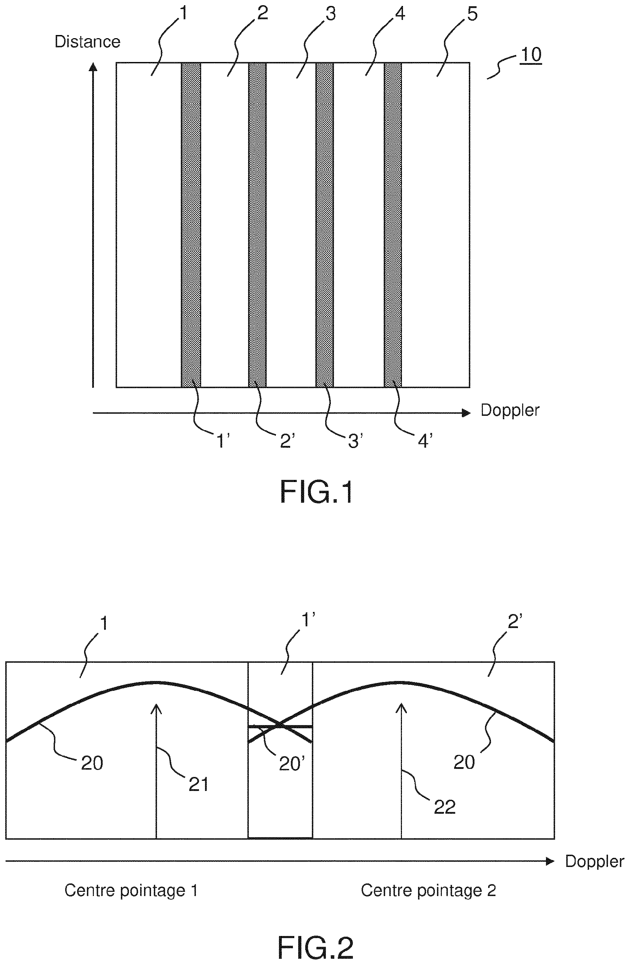

La figure 1 présente dans le plan Distance-Doppler une image SAR composée à l'aide de plusieurs spots successifs.

Pour produire des images SAR de grande taille, il est nécessaire de découper l'image en plusieurs parties 1, 2, 3, 4, 5 correspondant à des éclairements, ou spots, successifs de la zone à imager par le faisceau d'antenne du radar. De petites images 1, 2, 3, 4, 5, ou images élémentaires, sont ainsi formées et ensuite juxtaposées pour former une image 10 de grande taille.

Ce processus implique que chaque image ait une partie commune avec sa ou ses images adjacentes afin de rendre la juxtaposition possible, ces parties communes formant des zones de recouvrement.

La figure 1 présente un exemple d'image comportant cinq images élémentaires 1, 2, 3, 4, 5 avec quatre zones de recouvrement 1', 2', 3', 4'.

La figure 2 illustre l'énergie reçue dans deux zones élémentaires adjacentes imagées par deux images élémentaires adjacentes 1, 2 issues de deux spots successifs. Pour ces deux spots successifs, on obtient le gain théorique d'antenne 20 en projetant l'énergie reçue sur l'axe Doppler.

La figure 2 illustre le cas d'un pointage parfait. Dans ce cas, on observe que le gain d'antenne est identique sur les deux pointages dans la zone de recouvrement 1'. La moyenne 20' est la même pour les deux spots.

Ce résultat provient du fait que le gain d'antenne est parfaitement centré sur l'axe de pointage 21, 22 de chaque spot, et symétrique par rapport à cet axe. Etant donné que la zone imagée dans la zone de recouvrement est identique d'un spot à l'autre (spot successif), on en déduit que l'énergie reçue en provenance de la zone de recouvrement est quasi identique d'un spot à l'autre.

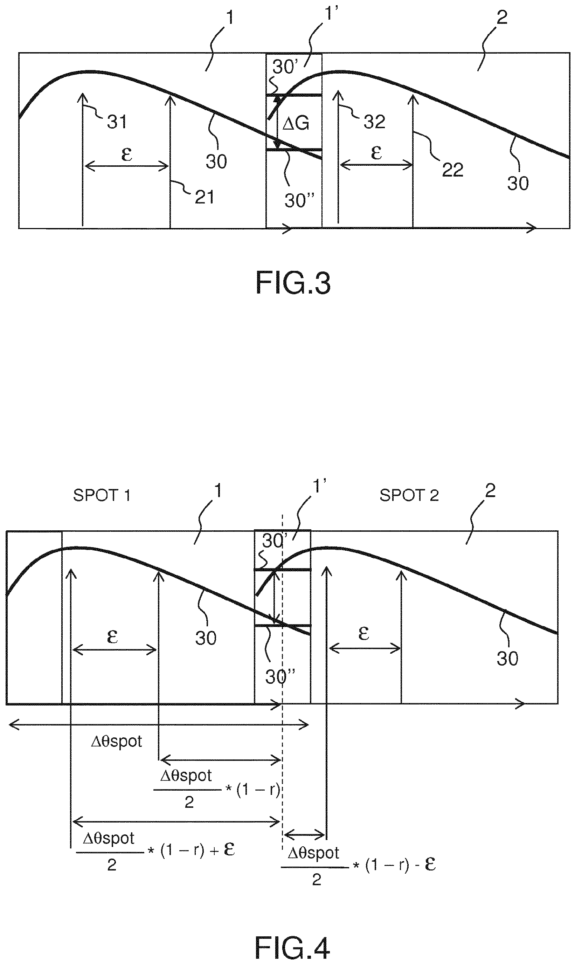

La figure 3, illustre un cas où le faisceau d'antenne a été dépointé lors de l'acquisition, ce dépointage étant dû à un des biais de pointage évoqués en introduction.

Comme pour la figure 2, la figure 3 présente toujours le gain d'antenne par rapport à l'axe Doppler, pour deux spots successifs et donc deux images élémentaires 1, 2 adjacentes. Cependant, l'axe de pointage 31, 32 de chacun des spots est dépointé par rapport à l'axe 21, 22 du cas idéal de la figure 2.

Le gain d'antenne 30 n'est plus symétrique sur le spot, ce qui a pour conséquence que d'un spot à l'autre le gain d'antenne est différent dans la zone de recouvrement 1'. La moyenne 30' du gain d'antenne du spot de la partie 2 (image de droite) est alors différente de la moyenne 30" du gain d'antenne du spot de la partie 3 (image de gauche). L'invention utilise avantageusement la différence de gain ΔG entre ces deux moyennes pour estimer le dépointage, et donc pour le compenser.

A cet effet, le procédé selon l'invention exploite la valeur de l'énergie reçue dans une zone de recouvrement 1' de deux images élémentaires adjacentes 1, 2, correspondant à deux spots successifs. Puis le procédé calcule, en temps réel, le dépointage de l'antenne à partir de ces énergies reçues.

Avantageusement, il n'est pas nécessaire d'avoir accès au gain dû au lobe d'antenne directement. L'utilisation astucieuse de la zone de recouvrement 1' permet de s'affranchir de ce problème d'accès en utilisant directement l'énergie reçue dans la zone de recouvrement.

En référence à la figure 4 qui reprend les éléments de la figure 3, on illustre ci-après un exemple d'exploitation de l'énergie reçue de deux spots consécutifs dans une zone de recouvrement d'images. Plus particulièrement, on décrit un exemple de calcul du dépointage d'antenne à partir de cette énergie reçue.

A cet effet, on note :

- $E_{spot11'}$, l'énergie reçue dans la zone de recouvrement 1' du spot générant l'image élémentaire 1, à gauche ;
- $E_{spot21'}$, l'énergie reçue dans la zone de recouvrement 1' du spot générant l'image élémentaire 2, à droite ;
- SER1', la surface équivalente radar perçue dans la zone de recouvrement, celle-ci étant la même pour les deux spots car ils éclairent tous deux cette même zone ;
- $G_{recouvrement1}$, la valeur moyenne du gain dans la zone de recouvrement 1' pour le spot de l'image élémentaire de gauche 1 ;
- $G_{recouvrement2}$, la valeur moyenne du gain dans la zone de recouvrement 1' pour le spot de l'image élémentaire de droite 2.

Le rapport des énergies reçues $E_{spoin11'}$ et $E_{spot21'}$ dans la zone de recouvrement étant égal au carré des valeurs de gain dans cette zone, on peut écrire :

$$\frac{E_{spot11'}}{E_{spot21'}} = \frac{SER1'.G^2_{recouvrement1}}{SER1'.G^2_{recouvrement2}} = \frac{G^2_{recouvrement1}}{G^2_{recouvrement2}} \quad (1)$$

On modélise le lobe antenne de telle façon que :

- $\theta$ représente l'angle entre le centre faisceau et la zone imagée ;
- le gain $G(\theta)$ est une fonction monotone décroissante de l'angle $\theta$ pour $\theta>0$, et $G(\theta) = G(-\theta)$ ;
- $\theta_{3dB}$ représente l'ouverture angulaire du faisceau pour une puissance égale à la puissance maximale - 3dB ;
- $\varepsilon$ représente le dépointage recherché de l'antenne ;
- r représente le taux de recouvrement entre les spots, plus précisément entre les images élémentaires 1, 2 correspondantes ;
- $\Delta\theta_{spot}$ représente la largeur angulaire d'un spot.

Selon cette modélisation, si le pointage est décentré de $\varepsilon$, comme illustré par la figure 3, la relation ci-dessous est alors vérifiée :

$$G(\varepsilon + \theta) = G(\varepsilon - \theta) \quad (2)$$

Or, si on s'intéresse à une zone de recouvrement, l'angle $\theta$ est alors un paramètre d'entrée de l'équation et il devient possible de calculer le dépointage $\varepsilon$ à partir de l'énergie reçue en provenance de la zone de recouvrement, selon la relation (1).
On applique, dans la relation (3) ci-dessous, ce principe à un lobe antenne, sans dépointage avec un gain de la forme :

$$G(\theta) = \exp[-4 * \ln(2) * (\frac{\theta}{\theta_{3dB}})^2]$$

Si le pointage est décentré de $\varepsilon$, alors selon la relation (4) suivante :

$$G(\theta) = \exp[-4 * \ln(2) * (\frac{\theta - \varepsilon}{\theta_{3dB}})^2]$$

En utilisant le quotient des énergies reçues dans la zone de recouvrement $\frac{E_{spot11'}}{E_{spot21'}}$, et plus particulièrement sa racine carrée $\sqrt{\frac{E_{spot11'}}{E_{spot21'}}}$, on accède au quotient $\frac{G_{recouvrement1}}{G_{recouvrement2}}$ qui est par ailleurs fonction du dépointage selon la relation (4) ci-dessus. Plus particulièrement, on obtient la relation (5) suivante :

$$\frac{G_{recouvrement1}}{G_{recouvrement2}} = \exp[-4 * \ln(2) * [\left(\frac{\frac{\Delta\theta_{spot}(1-r)}{2} + \varepsilon}{\theta_{3dB}}\right)^2 - \left(\frac{\frac{\Delta\theta_{spot}(1-r)}{2} - \varepsilon}{\theta_{3dB}}\right)^2]]$$

On en déduit le dépointage d'antenne ε fonction des énergies reçues des deux spots successifs dans la zone de recouvrement et des paramètres du faisceau connus par ailleurs, soit la relation (6) ci-dessous :

$$\varepsilon = \ln(G2/G1) * \frac{\theta_{3dB}^2}{8 * \ln(2) * \Delta\theta_{spot}(1-r)}$$

en notant :

- $G1 = G_{recouvrement1}$ ;
- $G2 = G_{recouvrement2}$.

Ainsi, connaissant la valeur du dépointage ε, on peut calculer le gain d'antenne à appliquer pour compenser le dépointage en appliquant la relation (4) précédente. On note $G_{correction}(\theta)$ ce gain de compensation donné par la relation (7) ci-dessous.

On corrige donc le gain d'antenne en appliquant la correction de gain $G_{correction}(\theta)$ définie par la relation (7) suivante :

$$G_{correction}(\theta) = \exp[+4 * \ln(2) * (\frac{\theta - \varepsilon}{\theta_{3dB}})^2]$$

Cette solution de compensation du lobe antenne permet avantageusement de s'adapter au défaut du radar. Cette solution reste applicable même si le défaut change au cours de temps. Elle est par ailleurs adaptative, et peut s'appliquer de radar à radar.

La compensation du dépointage d'antenne illustrée précédemment est donnée à titre d'exemple.

L'invention utilise avantageusement les puissances reçues dans une zone de recouvrement d'image, issues de deux spots successifs, et plus particulièrement la différence entre ces puissances. La mesure du dépointage ε est réalisée à partir de cette différence. Cette mesure étant connue, plusieurs solutions de compensations peuvent être mises en œuvre pour corriger l'image SAR.

Le dépointage est calculé en temps réel tout au long d'une mission d'imagerie. Plus précisément, il est calculé selon une période donnée. Chaque mesure de dépointage ε est prise en compte par les moyens de traitement qui appliquent la compensation de gain appliquée aux signaux reçus, en fonction de la mesure de dépointage ε.

## Revendications

1. Procédé de compensation de l'effet du dépointage d'antenne dans une image SAR réalisée par un radar formée de plusieurs images élémentaires (1, 2, 3, 4, 5) issues de spots d'émission successifs émis par ledit radar, lesdites images élémentaires se recouvrant en des zones dites de recouvrement (1', 2', 3', 4'), **caractérisé en ce qu'**il comporte:

   - une étape de mesure du dépointage (ε), déterminée à partir des énergies reçues de deux spots successifs (1, 2) dans la zone de recouvrement (1'), ladite mesure étant fonction du quotient des valeurs moyennes desdites énergies, la racine carré dudit quotient étant égal au quotient des gains d'antenne *G2* et *G1* (30', 30") dans ladite zone de recouvrement des spots;
   - une étape de calcul d'un terme de compensation $G_{correction}(\theta)$ fonction de l'angle θ entre le centre faisceau d'antenne et la zone imagée et de la mesure de dépointage (ε);
   - une étape de compensation de l'effet du dépointage consistant à appliquer à l'image SAR une correction égale au terme de compensation $G_{correction}(\theta)$.

**2.** Procédé selon la revendication 1, **caractérisé en ce que** la mesure du dépointage ($\varepsilon$) est déterminée par la relation suivante :

$$\varepsilon = \ln\left(\frac{G2}{G1}\right) * \frac{\theta_{3dB}^2}{8 * \ln(2) * \Delta\theta_{spot}(1-r)}$$

où :

- $\varepsilon$ représente ladite mesure du dépointage ;
- $\theta_{3dB}$ représente l'ouverture angulaire du faisceau d'antenne à puissance maximale - 3dB ;
- r représente le taux de recouvrement entre les images élémentaires (1, 2) correspondant auxdits deux spots consécutifs ;
- $\Delta\theta$spot représente la largeur angulaire desdits spots.

**3.** Procédé selon la revendication 2, **caractérisé en ce que** le terme de compensation $G_{correction}(\theta)$ appliqué à l'image SAR, fonction de l'angle $\theta$ entre le centre faisceau d'antenne et la zone imagée par ladite image SAR,=est donnée par la relation suivante :

$$G_{correction}(\theta) = \exp[+4 * \ln(2) * (\frac{\theta - \varepsilon}{\theta_{3dB}})^2]$$

**4.** Procédé selon l'une quelconque des revendications précédentes, **caractérisé en ce que** la mesure du dépointage ($\varepsilon$) est effectuée selon une période donnée.

**5.** Radar, **caractérisé en ce qu'**il est apte à mettre en œuvre le procédé selon l'une quelconque des revendications précédentes.

**Patentansprüche**

**1.** Verfahren zur Kompensation des Fehlausrichtungseffekts einer Antenne in einem SAR-Bild, welches durch einen Radar hergestellt wird, gebildet aus einer Vielzahl von Elementarbildern (1, 2, 3, 4, 5), welche aus nacheinander durch den Radar ausgesendeten Sendespots stammen, wobei die Elementarbilder sichin sogenannten Überlappungsbereichen (1', 2', 3', 4') überlappen, **dadurch gekennzeichnet, dass** es Folgendes umfasst:

- einen Schritt des Messens der Fehlausrichtung ($\varepsilon$), bestimmt anhand der empfangenen Energien zweier aufeinanderfolgender Spots (1, 2) in dem Überlappungsbereich (1'), wobei die Messung vom Quotienten der Mittelwerte der Energien abhängt, wobei die Quadratwurzel des Quotienten gleich dem Quotienten der Antennenverstärkungen *G2* und *G1* (30', 30") in dem Überlappungsbereich der Spots ist;
- einen Schritt des Berechnens eines Kompensationsterms $G_{correction}(\theta)$, abhängig vom Winkel $\theta$ zwischen dem Mittelpunkt des Antennenstrahls und dem abgebildeten Bereich und der Fehlausrichtungsmessung ($\varepsilon$);
- einen Schritt der Kompensation des Fehlausrichtungseffekts, darin bestehend, auf das SAR-Bild eine Korrektur gleich dem Kompensationsterm $G_{correction}(\theta)$ anzuwenden.

**2.** Verfahren nach Anspruch 1, **dadurch gekennzeichnet, dass** die Fehlausrichtungsmessung ($\varepsilon$) durch folgende Beziehung bestimmt wird:

$$\varepsilon = \ln\left(\frac{G2}{G1}\right) * \frac{\theta_{3dB}^2}{8 * \ln(2) * \Delta\theta_{spot}(1-r)}$$

wobei:

- $\varepsilon$ die Fehlausrichtungsmessung darstellt;
- $\theta_{3dB}$ die Winkelöffnung des Antennenstrahls bei maximaler Leistung -3 dB darstellt;

- r den Überlappungsprozentsatz zwischen den Elementarbildern (1, 2) darstellt, welche den beiden aufeinanderfolgenden Spots entsprechen;
- $\Delta\theta$spot die Winkelbreite der Spots darstellt.

**3.** Verfahren nach Anspruch 2, wobei der Kompensationsterm $G_{correction}(\theta)$, welcher auf das SAR-Bild angewandt wird, abhängig vom Winkel $\theta$ zwischen dem Mittelpunkt des Antennenstrahls und dem durch das SAR-Bild abgebildeten Bereich, sich durch folgende Beziehung ergibt:

$$G_{correction}(\theta) = \exp[+4 * \ln(2) * (\frac{\theta - \varepsilon}{\theta_{3dB}})^2]$$

**4.** Verfahren nach einem der vorhergehenden Ansprüche, **dadurch gekennzeichnet, dass** die Fehlausrichtungsmessung ($\varepsilon$) gemäß einer gegebenen Periode erfolgt.

**5.** Radar, **dadurch gekennzeichnet, dass** er in der Lage ist, das Verfahren nach einem der vorhergehenden Ansprüche umzusetzen.

**Claims**

**1.** Method for compensation of the effect of antenna off-pointing in an SAR image produced by a radar, said image being formed from a plurality of elementary images (1, 2, 3, 4, 5) issued from successive emission spots emitted by said radar, said elementary images overlapping each other in what are called zones of overlap (1', 2', 3', 4'), **characterized in that** it comprises:

- a step of measuring the off-pointing ($\varepsilon$) determined from the energies received from two successive spots (1, 2) in the zone of overlap (1'), said measurement being dependent on the quotient of the average values of said energies, the square root of said quotient being equal to the antenna gains $G2$ and $G1$ (30', 30") in said zone of overlap of the spots;
- a step of calculating a term of compensation $G_{correction}(\theta)$ dependent on the angle $\theta$ between the antenna beam center and the imaged zone and the measurement of the off-pointing ($\varepsilon$);
- a step of compensating the effect of the off-pointing consisting in applying to the SAR image a correction equal to the term of compensation $G_{correction}(\theta)$.

**2.** Method according to claim 1, **characterized in that** the measurement of the offpointing ($\varepsilon$) is determined by the following relationship:

$$\varepsilon = \ln\left(\frac{G2}{G1}\right) * \frac{\theta_{3dB}^2}{8 * \ln(2) * \Delta\theta_{spot}(1-r)}$$

where:

- $\varepsilon$ represents said measurement of the off-pointing;
- $\theta_{3dB}$ represents the angular aperture of the antenna beam at maximum power - 3dB;
- r represents the degree of overlap between the elementary images (1, 2) corresponding to said two consecutive spots;
- $\Delta\theta$spot represents the angular width of said spots.

**3.** Method according to claim 2, **characterized in that** the term of compensation $G_{correction}(\theta)$ applied to the SAR image, which is dependent on the angle $\theta$ between the antenna beam centre and the zone imaged by said SAR image, is given by the following relationship:

$$G_{correction}(\theta) = \exp[+4 * \ln(2) * (\frac{\theta - \varepsilon}{\theta_{3dB}})^2]$$

4. Method according to any one of the preceding claims, **characterized in that** the measurement of the off-pointing ($\varepsilon$) is carried out according to a given period.

5. Radar, **characterized in that** it is able to implement the method according to any one of the preceding claims.

FIG.1

FIG.2

FIG.3

FIG.4

# EP 3 457 174 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 8212714 B1